# EUROPÄISCHE PATENTSCHRIFT

(11) **EP 1 518 731 B1**
(45) Veröffentlichungstag und Bekanntmachung des Hinweises auf die Patenterteilung: **05.09.2007**
(21) Anmeldenummer: 04021806.7
(22) Anmeldetag: 14.09.2004
(51) Int. Cl.: B60H 3/06, B60H 1/00

(54) **Gebläse-Filter-Einheit**
Unit with fan and filter
Ensemble ventilateur-filtre

(30) Priorität: 24.09.2003 DE 10344552
(43) Veröffentlichungstag der Anmeldung: 30.03.2005
(73) Patentinhaber: Behr GmbH & Co. KG, 70469 Stuttgart (DE)
(72) Erfinder: Burr, Reinhold, 89522 Heidenheim (DE); Zipf, Nikolaus, 70563 Stuttgart (DE)

(56) Entgegenhaltungen:
- DE-A- 3 740 132
- US-A- 3 671 095
- US-A- 5 938 523
- US-A- 6 129 140

## Beschreibung

Die Erfindung betrifft eine Gebläse-Filter-Einheit mit einem Gebläse, dessen Förderluft einem Luftfilter zugeführt wird.

Derartige Gebläse-Filter-Einheiten werden beispielsweise für die Belüftung oder Klimatisierung der Innenräume von Fahrzeugen eingesetzt. Bei einem Einbau in ein Fahrzeug sind stets beengte Platzverhältnisse zu berücksichtigen. Ferner muss die Geräuschentwicklung gering gehalten werden, um den Geräuschpegel in der Fahrgastzelle niedrig zu halten. Für ein möglichst kleines Bauvolumen weist eine bekannte Gebläse-Filter-Einheit eine entsprechend kleine Filterfläche auf, die jedoch zu kürzeren Wartungsintervallen und einer schlechten Schadstofffiltration beim Einsatz von Aktivkohle-, Partikel- oder Hybridfiltern führt. Ein entsprechend großer Druckabfall ist die Folge. Um die benötigte Luftmenge bereitzustellen, muss ein entsprechend großer Volumenstrom pro Flächeneinheit die relativ kleine Filterflächen passieren, was zu erhöhtem Druckabfall und Geräusch führt.

Die gattungsgemäße DE 37 40 132 offenbart eine Gebläse-Filter-Einheit mit zwei Gebläsen, wobei die Luft zumindest des einen Gebläses über einen Filter geführt wird. Diese Anordnung ermöglicht eine Unterbringung der einzelnen Komponenten der Belüftungseinrichtung auch bei beengten Platzverhältnissen, lässt aber weiterhin wünsche offen.

Die Erfindung liegt daher die Aufgabe zugrunde, eine Gebläse-Filter-Einheit der eingangs genannten Art derart auszugestalten, dass bei kleinem Bauvolumen ein hoher Luftdurchsatz bei geräuscharmen Betrieb und ausreichender Schadstofffiltration möglich ist. Bevorzugt weist das Bauvolumen eine etwa quaderförmige Gestalt auf.

Diese Aufgabe wird erfindungsgemäß dadurch gelöst, dass das Gebläse als Mehrfachgebläse ausgebildet ist, dessen einzelne Luftfördereinheiten über getrennte Luftführungen jeweils mit mindestens einem eigenen Filterelement des Luftfilters in strömungstechnischer Verbindung stehen. Das Mehrfachgebläse erzeugt daher Einzelluftströme mittels einzelner Luftfördereinheiten, die jeweils getrennt über entsprechende Luftführungen einem jeweils zugeordneten Filterelement des Luftfilters zugeführt werden. Damit verteilt sich die Gesamtluftmenge auf einzelne Teilluftströme. Jeder Einzelluftstrom durchsetzt ein zugeordnetes Filterelement, das -aufgrund der separaten Luftführungen- relativ groß gestaltet werden kann und daher pro Flächeneinheit mit einem entsprechend niedrigen Volumenstrom beaufschlagt wird. Dies führt durch die dadurch erzielte große Filterfläche zu einem geringen Druckabfall, akustisch sehr guten Werten, einer guten Schadstofffiltration und langen Wartungsintervallen.

Insbesondere ist vorgesehen, dass stromabwärts des Luftfilters die von den einzelnen Filterelementen kommenden Luftströme, die bereits in der Zuströmung getrennt sein können, zu einem Hauptluftstrom vereinigt werden. Dieser Hauptluftstrom wird dann über ein entsprechendes Verteilungsnetz in den Innenraum des Fahrzeugs eingeleitet oder vorher lufttechnisch behandelt, beispielsweise erwärmt oder gekühlt. Alternativ ist es natürlich auch denkbar, dass die einzelnen Luftströme, die bereits in der Zuströmung getrennt sein können, nicht vereinigt, sondern getrennt weitergeführt werden, um spezielle Aufgaben zu erfüllen.

Nach einer Weiterbildung der Erfindung ist vorgesehen, dass das Gebläse als Radialgebläse mit axialer Luftzuführung und radialer Luftabführung ausgebildet ist. Bevorzugt strömt die angesaugte Luft somit axial in die Laufräder des Radialgebläses ein, wobei jedes Laufrad eine einzelne Luftfördereinheit ausbildet. Jedem Laufrad ist daher ein entsprechendes Laufradgehäuse zugeordnet. Durch die axiale Luftzuführung ist es möglich, den vorzugsweise als Elektromotor ausgebildeten Antrieb des Mehrfachgebläses zu kühlen, das heißt die angesaugte Luft strömt über den Motor und tritt dann axial in das jeweilige Laufradgehäuse ein. Die Luftabführung erfolgt in radialer Richtung in Bezug auf die Drehachse des Laufrades, also radial aus dem entsprechend zugeordneten Laufradgehäuse heraus und tritt dort jeweils in die getrennte Luftführung ein, die die Luft zu dem zugeordneten Filterelement führt.

Insbesondere weist das Mehrfachgebläse nur einen einzigen Antrieb auf. Dieser Antrieb bildet somit einen gemeinsamen Antrieb für die mehreren Laufräder des Mehrfachgebläses.

Nach einer besonders bevorzugten Bauform ist vorgesehen, dass der Antrieb zwei, einander diametral gegenüberliegende Abtriebs-Wellenstummel aufweist, die jeweils ein Laufrad tragen. Hierbei handelt es sich bevorzugt um einen Elektromotor, dessen Drehachse beidseitig aus dem Motorgehäuse herausgeführt ist, so dass auf die so gebildeten, einander diametral gegenüberliegende Wellenstummel jeweils ein Laufrad aufgebracht werden kann. Beiden Laufrädern ist ein entsprechendes Laufradgehäuse zugeordnet.

Nach einer Weiterbildung der Erfindung ist vorgesehen, dass die Filterflächen der Filterelemente quer zu der Drehachse des Antriebs verlaufen. Insbesondere verläuft -in einer horizontalen Ebene gesehen- die Drehachse des Mehrfachgebläses horizontal oder etwa horizontal und die Filterflächen der Filterelemente stehen senkrecht oder etwa senkrecht, wobei zwischen der Drehachse und den Filterflächen ein spitzer oder stumpfer Winkel ausgebildet wird. Dies führt dazu, dass -vorzugsweise axial- zu den Luftfördereinheiten einströmende Luft zunächst den Antriebsmotor kühlt, dann radial aus dem Laufradgehäuse austritt und dort in die zugeordnete Luftführung gelangt, die die Luft bogenförmig umlenkt, um dann auf die vertikal stehende, den Winkel mit der Drehachse der Luftfördereinheit einschließende Filterfläche des zugeordneten Filterelements zu treffen. Der Winkel zwischen der Drehachse und der Filterfläche des Filterelements beträgt -in der horizontalen Ebene gesehen- bevorzugt 45 bis 135°, er kann insbesondere 90° oder etwa 90° betragen. Auch ist es möglich, mindestens ein Filterelement mit einem Winkel von etwa 90° anzuordnen und ein anderes mit einem davon abweichenden Wert, beispielsweise etwa 70°.

Nach einem bevorzugten Ausführungsbeispiel ist vorgesehen, dass die Filterelemente mit ihren Filterflächen parallel oder unter einem spitzen Winkel zueinander stehen. Diese Aussage deckt sich mit den vorstehend angegebenen Winkelverhältnissen zwischen Drehachse und Filterfläche.

Nach einer Weiterbildung der Erfindung ist vorgesehen, dass jeweils zwei, einander gegenüberstehende Filterelemente zwischen sich einen Mischraum für die beiden, von ihnen kommenden, gefilterten Luftströme bilden. Insbesondere ist also vorgesehen, dass mittels zweier Luftfördereinheiten jeweils ein Teilluftstrom erzeugt wird, der jeweils durch eine getrennte Luftführung dem jeweilig zugehörigen Filterelement von außen her zugeführt wird. Die beiden Teilluftströme durchsetzen das entsprechende Filterelement und treffen sich dann innen, im Raum zwischen den beiden Filterelementen, um sich dort zu mischen. Dieser Raum wird daher Mischraum genannt. Da sich das Mehrfachgebläse seitlich der beiden Filterelemente befindet, erfolgt die Luftführung von den Luftfördereinheiten zu den jeweiligen Filterelementen bogenförmig, wobei der eine Teilluftstrom einen Linksbogen und der andere Teilluftstrom einen Rechtsbogen durchläuft. Insbesondere ergibt sich daraus, dass die Luftführungen von Strömungskanälen gebildet werden, die -in Strömungsrichtung gesehen- in radialer Richtung bezüglich der einzelnen Luftfördereinheiten verlaufend beginnen und dann die Luft bogenförmig auf die zugeordneten Filterflächen der Filterelemente leiten. Um einen möglichst geringen Druckabfall und ein niedriges Strömungsgeräusch bei geringem Bauvolumen zu erzeugen, ist zusätzlich vorgesehen, dass sich die Luftführungen in radialer Richtung zur Luftfördereinheit im parallel zur zugeordneten Filterfläche des Filterelements verlaufenden Querschnitt vergrößern, je näher der Querschnitt zur Filterfläche liegt. Ferner ist insbesondere vorgesehen, dass sich die Luftführungen in axialer Richtung zur Luftfördereinheit im Querschnitt verkleinern, je weiter der Querschnitt von der Drehachse der Luftfördereinheit entfernt liegt. Insgesamt wird somit ein gleichmäßiges Bestromen der gesamten Filterfläche erzeugt und gleichzeitig nur ein geringer Bauraum beansprucht.

Insbesondere kann vorgesehen sein, dass die Außenquerabmessung der Luftführungen mit dazwischen liegenden Filterelementen und mindestens einem Mischraum etwa ebenso groß ist, wie die Außenabmessung des Gebläses zwischen den Endwänden seines Laufrädergehäuses/seiner Laufradgehäuse und wobei insbesondere die Außenlängsabmessung der Gebläse-Filter-Einheit im Wesentlichen durch die Längserstreckung der Filterelemente und dem/die Durchmesser des Laufrädergehäuses/der Laufradgehäuse bestimmt ist. Auf diese Art und Weise lässt sich eine etwa quaderförmige Gestalt der Gesamtanordnung erzielen, die nur geringen Raumbedarf beansprucht und überdies aufgrund ihrer Formgebung sehr einfach und problemlos im Fahrzeug untergebracht werden kann.

Die Zeichnungen veranschaulichen die Erfindung anhand von Ausführungsbeispielen, und zwar zeigt:
- Figur 1: eine perspektivische Ansicht auf eine Gebläse-Filter-Einheit und
- Figur 2: eine schematische Längsschnittansicht der Einheit der Figur 1.

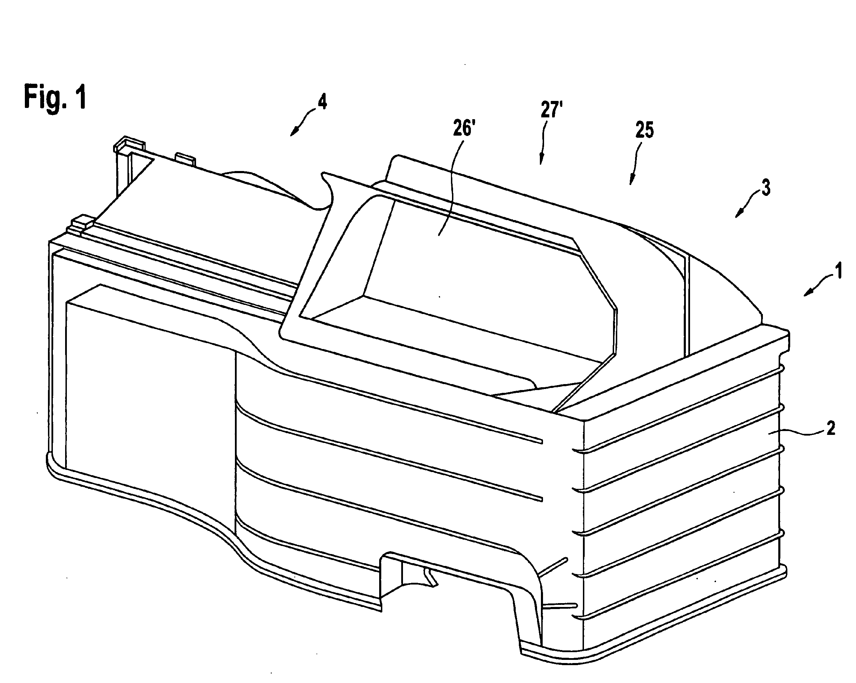

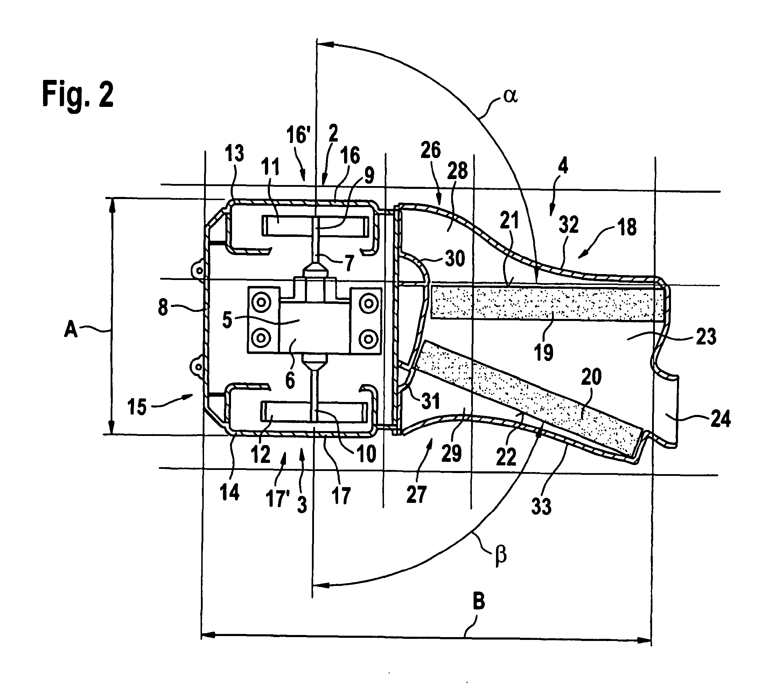

Die Figur 1 zeigt eine Gebläse-Filter-Einheit 1, die ein vorzugsweise aus Kunststoff bestehendes Gehäuse 2 aufweist. Die Gebläse-Filter-Einheit 1 weist ein Gebläse 3 und ein Luftfilter 4 auf. Aus der Figur 1 ist erkennbar, dass insgesamt eine etwa rechteckförmige Kontur der Gebläse-Filter-Einheit 1 vorliegt, wobei -gemäß Figur 2- das Gebläse 3 eine einem Quadrat angenäherte Grundfläche aufweist und das Luftfilter 4 im Wesentlichen eine rechteckförmige Grundfläche besitzt, die allerdings durch kurvenförmige Konturen von einem streng mathematischen Rechteck abweicht.

Gemäß Figur 2 weist das Gebläse 3 einen Antrieb 5 auf, der als Elektromotor 6 ausgebildet ist. Die Drehachse 7 des Elektromotors 6 verläuft parallel zur Stirnseite 8 des Gehäuses 2. Der Elektromotor 6 weist zwei einander gegenüberliegende Antriebs-Wellenstummel 9, 10 auf, auf denen sich jeweils ein Laufrad 11, 12 befindet. Das Laufrad 11 wird von einem Laufradgehäuse 13 und das Laufrad 12 von einem Laufradgehäuse 14 umgeben, wobei die beiden Laufradgehäuse 13 und 14 integral mit dem Gehäuse 2 ausgebildet sind. Aufgrund der beiden, nur von dem einen Elektromotor 6 angetriebenen Laufräder 11 und 12 ist ein Mehrfachgebläse 15 ausgebildet, das zwei Luftfördereinheiten 16' und 17' entsprechend der Laufräder 11 und 12 aufweist. Die Endwand 16 des Laufradgehäuses 13 und die Endwand 17 des Laufradgehäuses 14 verlaufen unter einem rechten Winkel zur Längserstreckung der Drehachse 7 und bilden zwischen sich die Außenquerabmessung A der Gebläse-Filter-Einheit 1 aus.

An das Gebläse 3 schließt sich -vorzugsweise einstückig- die mit dem Luftfilter 4 ausgebildete Luftfiltereinheit 18 an, die zwei Filterelemente 19, 20 aufweist. Die Filterelemente 19, 20 sind quaderförmig ausgebildet; ihre Filterflächen 21, 22 stehen senkrecht auf der Papierebene der Figur 2. Die Drehachse 7 des Gebläses 3 verläuft parallel zur Zeichnungsebene der Figur 2. Ferner ist der Figur 2 entnehmbar, dass die Filterfläche 21 mit der Drehachse 7 einen Winkel α von 90° einschließt. Die Filterfläche 22 schließt mit der Drehachse 7 einen Winkel <90°, vorzugsweise etwa 70° ein. Zwischen den beiden Filterelementen 19 und 20 ist ein Mischraum 23 ausgebildet, der mit einem Luftauslass 24 versehen ist.

An seiner Oberseite 25 weist das Gehäuse 2 gemäß Figur 1 für jede Luftfördereinheit 16', 17' einen Lufteinlass 26' beziehungsweise 27' auf. Die Lufteinlässe 26' beziehungsweise 27' verlaufen in Richtung der Außenlängsabmessung der Gesamtanordnung, die in der Figur 2 mit B gekennzeichnet ist.

Gemäß Figur 2 führt von der Luftfördereinheit 16' eine Luftführung 26 zum Filterelement 19 und von der Luftfördereinheit 17' eine Luftführung 27 zum Filterelement 20. Die Luftführung 26 ist als Strömungskanal 28 ausgebildet, der getrennt ist von dem Strömungskanal 29, der die Luftführung 27 bildet. Die Luftführung 26 überragt nicht die Außenquerabmessung A; die Luftführung 27 überragt ebenfalls nicht die Außenquerabmessung A.

Die beiden Filterelemente 19 und 20 befinden sich etwa mit ihren dem Gebläse 3 zugeordneten Endbereichen in der Zone, die vom Elektromotor 6 eingenommen wird. Die gegenüberliegenden Endbereiche haben eine grö-ßere Entfernung aufgrund der Schrägstellung der beiden Filterelemente 19 und 20 zueinander, wobei der Endbereich des Filterelements 19 aufgrund des Winkels α gleich 90° auf gleicher Höhe wie sein zugehöriger anderer Endbereich liegt und der gebläseentfernte Endbereich des Filterelements 20 etwa bis an die Außenquerabmessung A heranreicht.

Die Strömungskanäle 28 und 29 sind derart gestaltet, dass die radial von den Laufrädern 11 und 12 kommende Luft bogenförmig in Richtung auf die Filterflächen 21 beziehungsweise 22 nach innen geführt werden. Hierzu sind gebogene Gehäuseinnenwände 30, 31 im Bereich des Luftfilters 4 vorgesehen. Die im Bereich des Luftfilters 4 liegende Gehäuseaußenwand 32 weist in der Draufsicht gesehen etwa eine S-Form auf; die Gehäuseaußenwand 33 besitzt im Bereich des Filterelements 20 eine konkave Form.

Es ergibt sich folgende Funktion: Bei laufendem Elektromotor 6 werden die beiden Laufräder 11 und 12 gemeinsam angetrieben, wodurch durch die Lufteinlässe 26' und 27' jeweils Luft angesaugt und axial den Laufrädern 11, 12 unter Kühlung des Elektromotors 6 zugeführt wird. Alternativ ist es auch möglich, dass durch nur einen Lufteinlass (26' und 27') Luft angesaugt und axial den Laufrädern 11, 12 unter Kühlung des Elektromotors 6 zugeführt wird. Das Laufrad 11 fördert die Luft radial über die Luftführung 26 zum Filterelement 19; das Laufrad 12 fördert die zugehörige Luft radial über die Luftführung 27 zum Filterelement 20. Beide Teilluftströme werden mittels der Filterelement 19, 20 gefiltert und vereinigen sich im Mischraum 23. Die gesamte, gefilterte Luft strömt anschließend aus dem Luftauslass 24 heraus.

Insgesamt ergibt sich daher eine Gebläse-Filter-Einheit 1 mit Doppelfiltern, die in einem beliebigen Winkel zueinander stehen. Alternativ können die Filter auch parallel zueinander verlaufen. Die Anströmung erfolgt mit einzelnen, getrennten Teilluftströmen, die über einzelne, getrennte Luftfördereinheiten 16' und 17' erfolgt, wobei jeder Teilluftstrom entlang einer getrennten Luftführung 26, 27 einem jeweils zugeordneten Filterelement 19, 20 zugeführt wird oder wobei entweder die Luftführung 26 oder die Luftführung 27 aktiv ist. Das so gebildete Doppelgebläse weist eine sehr geringe bauliche Dimensionierung auf und saugt die Luft axial an und stößt sie radial aus. Die Zuströmung zu den Gebläsen erfolgt über die beiden inneren Fluten, wobei der Elektromotor 6 mit überströmt wird. Die beiden Filterelemente 19, 20 bilden ein Luftfilter 4. Die beiden Filterelemente 19, 20 können als Gleichteile ausgebildet werden, was zur Kosteneinsparung führt. Durch die getrennten Zuströmungen zu den Filtern kann der Bauraum im Filterbereich über die gesamte Länge für die Filterelemente 19, 20 genutzt werden. Aufgrund der axialen Anströmung des Motors wird dieser gekühlt, wobei sich dort auch der Regler für den Motor befinden kann. Hilfseinrichtungen zur weiteren Kühlung sind daher nicht erforderlich. Die beiden Filterelemente 19, 20 werden aus jeder der beiden Gehäusespiralen der beiden Laufradgehäuse 13, 14 einzeln angeströmt. Somit erfolgt bei dem vorliegenden Konzept mit einem Doppelgebläse und zwei Einzelfiltern nur eine einmalige Ausmischung (ohne separate Anströmung der Einzelfilter wäre zweimalige Ausmischung von Teilluftmassenströmen notwendig, was zu einem erhöhten Druckabfall und zu einer erhöhten Geräuschbildung führen würde). Die Teilluftströme werden somit erst stromab der Filterelemente 19, 20 vermischt. Der angesaugte Luftstrom kommt über ein gemeinsames Ansauggehäuse in den Gebläsebereich. Insgesamt liegt erfindungsgemäß ein günstiges Verhältnis von Filterfläche zu Filtergehäusevolumen vor, so dass eine optimale Bauraumausnutzung gegeben ist und gleichzeitig nur eine geringe Geräuschentwicklung bei optimaler Filtrationsleistung entsteht. Es ist auch möglich, insgesamt eine getrennte Luftführung vorzusehen, die sich durch ein sich anschließendes Klimagerät fortsetzt. Eine separate Behandlung der beiden Teilluftmassenströme kann auch mit unterschiedlichen Wärmetauschern erfolgen.

## Patentansprüche

1. Gebläse-Filter-Einheit mit einem Gebläse, dessen von Fördereinheiten erzeugte Förderluft einem Luftfilter zugeführt wird, **dadurch gekennzeichnet, dass** das Gebläse (3) als Mehrfachgebläse (15) ausgebildet ist, dessen einzelne Luftfördereinheiten (16',17') über getrennte Luftführungen (26,27) jeweils mit mindestens einem eigenen Filterelement (19,20) des Luftfilters (4) in strömungstechnischer Verbindung stehen.

2. Gebläse-Filter-Einheit nach Anspruch 1, **dadurch gekennzeichnet, dass** stromabwärts des Luftfilters (4) die von den einzelnen Filterelementen (19,20) kommenden Luftströme zu einem Hauptluftstrom vereinigt werden.

3. Gebläse-Filter-Einheit nach einem der vorhergehenden Ansprüche, **dadurch gekennzeichnet, dass** das Gebläse (3) als Radialgebläse mit axialer Luftzuführung und radialer Luftabführung ausgebildet ist.

4. Gebläse-Filter-Einheit nach einem der vorhergehenden Ansprüche, **dadurch gekennzeichnet, dass** das Mehrfachgebläse (15) nur einen einzigen Antrieb (5) aufweist.

5. Gebläse-Filter-Einheit nach einem der vorhergehenden Ansprüche, **dadurch gekennzeichnet, dass** der Antrieb (5) zwei, einander diametral gegenüberliegende Abtriebs-Wellenstummel (9,10) aufweist, die jeweils ein Laufrad (11,12) tragen.

6. Gebläse-Filter-Einheit nach einem der vorhergehenden Ansprüche, **dadurch gekennzeichnet, dass** der Antrieb (5) ein Elektromotor (6) ist.

7. Gebläse-Filter-Einheit nach einem der vorhergehenden Ansprüche, **dadurch gekennzeichnet, dass** die Filterflächen (21,22) der Filterelemente (19,20) quer zu der Drehachse (7) des Antriebs (5) verlaufen.

8. Gebläse-Filter-Einheit nach einem der vorhergehenden Ansprüche, **dadurch gekennzeichnet, dass** die Filterelemente (19,20) mit ihren Filterflächen (21,22) parallel oder unter einem spitzen Winkel zueinander stehen.

9. Gebläse-Filter-Einheit nach einem der vorhergehenden Ansprüche, **dadurch gekennzeichnet, dass** jeweils zwei, einander gegenüberstehende Filterelemente (19,20) zwischen sich einen Mischraum (23) für die beiden von ihnen kommenden, gefilterten Luftströme bilden.

10. Gebläse-Filter-Einheit nach einem der vorhergehenden Ansprüche, **dadurch gekennzeichnet, dass** die Luftführungen (26,27) von Strömungskanälen (28,29) gebildet werden, die -in Strömungsrichtung gesehen- in radialer Richtung bezüglich der einzelnen Luftfördereinheiten (16',17') verlaufend beginnen und dann die Luft bogenförmig auf die zugeordneten Filterflächen (21,22) der Filterelemente (19,20) leiten.

11. Gebläse-Filter-Einheit nach einem der vorhergehenden Ansprüche, **dadurch gekennzeichnet, dass** sich die Luftführungen (26,27) in radialer Richtung zur Luftfördereinheit (16',17') im parallel zur zugeordneten Filterfläche (21,22) des Filterelements (19,20) verlaufenden Querschnitt vergrößern, je näher der Querschnitt zur Filterfläche (21,22) liegt.

12. Gebläse-Filter-Einheit nach einem der vorhergehenden Ansprüche, **dadurch gekennzeichnet, dass** sich die Luftführungen (24,27) in axialer Richtung zur Luftfördereinheit (16',17') im Querschnitt verkleinern, je weiter der Querschnitt von der Drehachse der Luftfördereinheit (16',17') entfernt liegt.

13. Gebläse-Filter-Einheit nach einem der vorhergehenden Ansprüche, **dadurch gekennzeichnet, dass** die Außenquerabmessung (A) der Luftführungen (26,27) mit dazwischen liegenden Filterelementen (19,20) und mindestens einem Mischraum (23) ebenso groß ist, wie die Außenabmessung des Gebläses (3) zwischen den Endwänden (16,17) seines Laufrädergehäuses/seiner Laufradgehäuse.

14. Gebläse-Filter-Einheit nach einem der vorhergehenden Ansprüche, **dadurch gekennzeichnet, dass** ihre Außenlängsabmessung (B) im Wesentlichen durch die Längserstreckung der Filterelemente (19,20) und dem/die Durchmesser des Laufrädergehäuses/der Laufradgehäuse bestimmt ist.

15. Gebläse-Filter-Einheit nach einem der vorhergehenden Ansprüche, **dadurch gekennzeichnet, dass** die Drehachse (7) des Mehrfachgebläses (15) horizontal oder etwa horizontal verläuft und dass die Filterflächen (21,22) der Filterelemente (19,20) senkrecht oder etwa senkrecht stehen.

## Claims

1. A unit with fan and filter having a fan, its feed air being generated by feed units and fed to an air filter,
**characterised in that**
the fan (3) is designed as a multiple fan (15) with individual air feed devices (16' 17') which are connected fluidically via separate air ducts (26, 27) to at least one individual filter element (19, 20) of the air filter (4).

2. A unit with fan and filter in accordance with claim 1,
**characterised in that**
downstream of the air filter (4) the air flows coming from the individual filter elements (19, 20) are combined to form a main air flow.

3. A unit with fan and filter in accordance with one of the preceding claims,
**characterised in that**
the fan (3) is designed as a radial fan with axial air supply and radial air delivery.

4. A unit with fan and filter in accordance with one of the preceding claims,
**characterised in that**
the multiple fan (15) has only one drive unit.

5. A unit with fan and filter in accordance with one of the preceding claims,
**characterised in that**
the drive unit (5) has two driven shaft stumps (9, 10) positioned diametrically opposite one another.

6. A unit with fan and filter in accordance with one of the preceding claims,
**characterised in that**
the drive unit (5) is an electric motor (6).

7. A unit with fan and filter in accordance with one of the preceding claims,
**characterised in that**
the filter surfaces (21, 22) of the filter elements (19, 20) run at an angle to the axis of rotation (7) of the drive unit (5).

8. A unit with fan and filter in accordance with one of the preceding claims,
**characterised in that**
the filter surfaces (21, 22) of the filter elements (19, 20) are positioned parallel or at an acute angle in relation to one another.

9. A unit with fan and filter in accordance with one of the preceding claims,
**characterised in that**
together two opposing filter elements (19, 20) form a mixing space (23) for the two flows of filtered air coming from them.

10. A unit with fan and filter in accordance with one of the preceding claims,
**characterised in that**
the air ducts (26, 27) take the form of flow channels (28, 29) which start running radially - when viewed in the direction of flow - in relation to the individual air delivery unit (16' 17') and then conduct the air in a curve onto the assigned filter surfaces (21, 22) of the filter elements (19, 20).

11. A unit with fan and filter in accordance with one of the preceding claims,
**characterised in that**
the cross section of the air ducts (26, 27) running parallel to the assigned filter surface (21, 22) of the filter element (19, 20) increases radially in relation to the air delivery unit (16' 17') the closer said cross section is to the filter surface (21, 22).

12. A unit with fan and filter in accordance with one of the preceding claims,
**characterised in that**
the cross section of the air ducts (26, 27) decreases axially in relation to the air delivery unit (16', 17') the further said cross section is from the axis of rotation of the air delivery unit (16', 17').

13. A unit with fan and filter in accordance with one of the preceding claims,
**characterised in that**
the external transverse dimension (A) of the air ducts (26, 27) with the filter elements (19,20) lying between them and at least one mixing space (23) are the same size as the external dimension of the fan (3) between the end walls (16, 17) of the housing for its impeller(s).

14. A unit with fan and filter in accordance with one of the preceding claims,
**characterised in that**
its external length dimension (B) is determined essentially by the length of the filter elements (19, 20) and the diameter(s) of the impeller housing(s).

15. A unit with fan and filter in accordance with one of the preceding claims,
**characterised in that**
the axis of rotation (7) of the multiple fan (15) runs horizontally or approximately horizontally and the filter surfaces (21, 22) of the filter elements (10, 20) are vertical or approximately vertical.

## Revendications

1. Ensemble ventilateur-filtre avec un ventilateur dont l'air refoulé généré par l'unité de refoulement est amené vers un filtre à air, **caractérisé en ce que** le ventilateur (3) est réalisé comme ventilateur à plusieurs compartiments (15) dont les différentes unités de refoulement d'air (16', 17') sont reliées chacune par technique d'écoulement à au moins un élément de filtre (19, 20) propre du filtre à air (4) au moyen de conduits d'air séparés (26, 27).

2. Ensemble ventilateur-filtre selon la revendication 1, **caractérisé en ce qu'**en aval du filtre à air (4), les flux d'air provenant des différents éléments de filtre (19, 20) sont réunis en un flux d'air principal.

3. Ensemble ventilateur-filtre selon l'une des revendications précédentes, **caractérisé en ce que** le ventilateur (3) est réalisé comme ventilateur radial à amenée d'air axiale et évacuation d'air radiale.

4. Ensemble ventilateur-filtre selon l'une des revendications précédentes, **caractérisé en ce que** le ventilateur à plusieurs compartiments (15) ne comprend qu'un seul moteur (5).

5. Ensemble ventilateur-filtre selon l'une des revendications précédentes, **caractérisé en ce que** le moteur (5) comprend deux bouts d'arbre d'entraînement (9, 10) diamétralement opposés supportant chacun une roue (11, 12).

6. Ensemble ventilateur-filtre selon l'une des revendications précédentes, **caractérisé en ce que** le moteur (5) est un moteur électrique (6).

7. Ensemble ventilateur-filtre selon l'une des revendications précédentes, **caractérisé en ce que** les surfaces de filtre (21, 22) des éléments de filtre (19, 20) s'étendent perpendiculairement à l'axe de rotation (7) de l'entraînement (5).

8. Ensemble ventilateur-filtre selon l'une des revendications précédentes, **caractérisé en ce que** les éléments de filtre (19, 20) sont parallèles ou forment entre eux un angle aigu par leurs surfaces de filtre (21, 22).

9. Ensemble ventilateur-filtre selon l'une des revendications précédentes, **caractérisé en ce que** deux éléments de filtre diamétralement opposés (19, 20) forment entre eux une chambre de mélange (23) pour les deux flux d'air filtré qui en proviennent.

10. Ensemble ventilateur-filtre selon l'une des revendications précédentes, **caractérisé en ce que** les conduits d'air (26, 27) sont formés par des canaux d'écoulement (28, 29) s'étendant d'abord en direction radiale - par rapport au sens d'écoulement - relativement aux différentes unités de refoulement d'air (16', 17') et arqués ensuite pour amener l'air vers les surfaces de filtre (21, 22) correspondantes des éléments de filtre (19, 20).

11. Ensemble ventilateur-filtre selon l'une des revendications précédentes, **caractérisé en ce que** la section des conduits d'air (26, 27) parallèle à la surface de filtre (21, 22) correspondante de l'élément de filtre (19, 20) s'agrandit d'autant plus en direction radiale par rapport à l'unité de refoulement d'air (16', 17'), que la section se rapproche de la surface de filtre (21, 22).

12. Ensemble ventilateur-filtre selon l'une des revendications précédentes, **caractérisé en ce que** la section des conduits d'air (26, 27) diminue d'autant plus en direction axiale par rapport à l'unité de refoulement d'air (16', 17'), que la section s'éloigne de l'axe de rotation de l'unité de refoulement d'air (16', 17').

13. Ensemble ventilateur-filtre selon l'une des revendications précédentes, **caractérisé en ce que** la cote transversale extérieure (A) des conduits d'air (26, 27) avec les éléments de filtre (19, 20) inclus ainsi qu'au moins une chambre de mélange (23), est de grandeur égale à la cote extérieure du ventilateur (3) entre les parois d'extrémité (16, 17) de son carter/de ses carters de roue(s).

14. Ensemble ventilateur-filtre selon l'une des revendications précédentes, **caractérisé en ce que** sa cote longitudinale extérieure (B) est sensiblement définie par l'extension longitudinale des éléments de filtre (19, 20) et le/les diamètres du carter/des carters de roue(s).

15. Ensemble ventilateur-filtre selon l'une des revendications précédentes, **caractérisé en ce que** l'axe de rotation (7) du ventilateur à plusieurs compartiments (15) s'étend à l'horizontale ou sensiblement à l'horizontale, et **en ce que** les surfaces de filtre (21, 22) des éléments de filtre (19, 20) sont verticales ou sensiblement verticales.
